# EUROPEAN PATENT APPLICATION

(11) **EP 2 674 631 A1**
(43) Date of publication of application: **18.12.2013**
(21) Application number: 13171476.8
(22) Date of filing: 11.06.2013
(51) Int. Cl.: F16B 39/02, F01M 11/03

(54) **Screw installation structure**

(30) Priority: 11.06.2012 JP 2012131455
(71) Applicant: MAHLE Filter Systems Japan Corporation, Toshima-ku, Tokyo 170-0004 (JP)
(72) Inventor: Harada, Kentaro, Toshima-ku, Tokyo 170-0004 (JP); Suzuki, Yasuaki, Toshima-ku, Tokyo 170-0004 (JP)
(74) Representative: Grünecker, Kinkeldey, Stockmair & Schwanhäusser

(57) **Abstract**

In a screw installation structure in which a first member (8), made of an iron-based material and having a male screw-threaded portion (32), is fixed to a second member (7), made of an aluminum-based material and having a screw hole (27), by screw-threaded connection between the male screw-threaded portion (32) and the screw hole (27), a non-circular deformed portion (31a; 38) is partly formed on an outer periphery of a portion of the first member (8), exposed from the screw hole (27) of the second member. Also provided is an anti-rotation and anti-loosening member (35; 39) configured to be brought into fitted-engagement with the non-circular deformed portion (31a; 38). The anti-rotation and anti-loosening member (35; 39), in fitted-engagement with the non-circular deformed portion (31a; 38), is brazed onto a surface of the second member (7) in wall contact with a contact surface of the anti-rotation and anti-loosening member (35; 39), so as to prevent loosening of the first (8) member relative to the second member (7).

## Description

### TECHNICAL FIELD

The present invention relates to a screw installation structure that a first member is fixedly connected to a second member by screw-threaded engagement of the first member having a male screw-threaded portion with a screw hole (a female screw-threaded portion) of the second member, and specifically to the improvement of an anti-rotation and anti-loosening structure that prevents loosening between these screw-threaded portions engaged each other.

### BACKGROUND ART

As an oil cooler for cooling an automotive engine oil or an automotive transmission oil, a detachable oil-filter equipped oil cooler is generally known. This type of oil cooler has a screw-threaded connector installed at its center in a standing manner. The bottom (the sealing-gasket side) of a cylindrical casing of an oil filter is detachably installed onto a male screw-threaded portion formed at one axial end of the connector. On these kinds of detachable oil-filter equipped oil coolers, in the case of the connector fixed to the main body of an oil cooler by screw-threaded connection, there is a drawback that the connector would be undesirably rotated together with unscrewing motion of the oil filter and thus loosened, when removing the oil filter. By the way, for the purpose of increasing the mechanical strength of the connector, assume that, on the one hand, the connector is made of an iron-based material, and, on the other hand, each of component parts of the oil cooler is made of an aluminum-based material. In such a case, generally, it is difficult to join these two different metallic components together by brazing.

To prevent a screw-threaded connector from undesirably loosening or rotating due to unscrewing motion of an oil filter to be removed or replaced, Patent document 1 teaches an anti-loosening structure having a groove (a channel) partly cut or formed in the outer peripheral surface of the male screw-threaded portion of the connector. In the anti-loosening structure of the Patent document 1, when heating and brazing a filter seating plate, which is mounted on the top face of an oil cooler and equipped with the connector screwed thereto, together with the other plates (e.g., core plates and the like), in a furnace, the aforementioned groove (the channel) and the very small aperture defined between the male screw-threaded portion of the connector and the female screw-threaded portion of the filter seating plate are both filled with the melted brazing filler metal by capillary attraction (capillary phenomenon). The brazing filler metal, solidified in the groove of the connector and the very small aperture between the male and female screw-threaded portions, serves to physically prevent rotary motion (loosening) of the connector relative to the filter seating plate.

### Citation List

### Patent Literature

Patent document 1: Japanese patent provisional publication No. 2010-58166 (A), assigned to the assignee of the present invention (hereinafter is referred to as "JP2010-058166")

### SUMMARY OF THE INVENTION

The prior-art anti-loosening structure, disclosed in JP2010-058166, is effective to prevent loosening of the connector (the first member) relative to the filter seating plate (the second member). However, the prior-art anti-loosening structure requires high-precision management of various heating conditions, such as heating temperatures and heating time during brazing process, in order to permit sufficient penetration (sufficient distribution) of the brazing filler metal around the desired brazing area. Hence, there is still room for improvement in view of the enhanced production efficiency. For instance, assume that a so-called clad material (a metal clad) that a brazing filler metal layer having a melting point relatively lower than that of a base metal is coated on a surface of the base metal made of aluminum alloy, is used as a filler metal for brazing. In such a case, the difference between the melting point (the softening point) of the base metal and the melting point of the brazing filler metal is comparatively small. Thus, overheating results in undesirable softening of the base metal. In contrast, in the case of insufficient heating, the brazing filler metal cannot be sufficiently penetrated or distributed around the brazing area (i.e., in the groove of the connector and the very small aperture between the male and female screw-threaded portions). This leads to a lack in mechanical strength for the anti-loosening structure that prevents loosening (rotary motion) of the connector relative to the filter seating plate.

Accordingly, it is an object of the invention to provide a screw installation structure having an improved anti-rotation and anti-loosening structure configured to more certainly prevent undesirable loosening (undesirable rotary motion) of a first member (e.g., a connector fixed to a filter seating plate) relative to a second member (e.g., the filter seating plate constructing part of an oil cooler) without high-precision management of various heating and brazing conditions, such as heating temperatures and heating time during brazing process.

In order to accomplish the aforementioned and other objects of the present invention, a screw installation structure in which a first member having a male screw-threaded portion is fixed to a second member having a screw hole by screw-threaded connection between the male screw-threaded portion and the screw hole, comprises a non-circular deformed portion partly formed on an outer periphery of a portion of the first member, exposed from the screw hole of the second member, and an anti-rotation and anti-loosening member configured to be brought into fitted-engagement with the non-circular deformed portion, wherein the anti-rotation and anti-loosening member, in fitted-engagement with the non-circular deformed portion, is brazed onto a surface of the second member in wall contact with a contact surface of the anti-rotation and anti-loosening member.

The other objects and features of this invention will become understood from the following description with reference to the accompanying drawings.

### BRIEF DESCRIPTION OF THE DRAWINGS

Fig. 1 is a cross-sectional view illustrating a detachable oil-filter equipped oil cooler with a screw-threaded connector to which an embodiment of a screw installation structure is applied.
Fig. 2 is a perspective view of the oil cooler shown in Fig. 1, highlighting the screw-threaded connector and an anti-rotation and anti-loosening member, both disassembled from the main body of the oil cooler.
Fig. 3 is a perspective view illustrating only an essential part of the installation structure of the connector.
Fig. 4 is a disassembled view illustrating the essential part of the installation structure of the connector.
Fig. 5 is a plan view illustrating the essential part of the installation structure of the connector.
Fig. 6 is a cross-sectional view illustrating the essential part of the installation structure of the connector.
Fig. 7 is a disassembled view illustrating the second embodiment of a connector installation structure, as viewed from the upside.
Fig. 8 is a disassembled view of the connector installation structure of the second embodiment, as viewed from the underside.
Fig. 9 is a perspective view of the connector installation structure of the second embodiment (as viewed from the underside), in which the connector is assembled and fixed.

### DESCRIPTION OF THE PREFERRED EMBODIMENTS

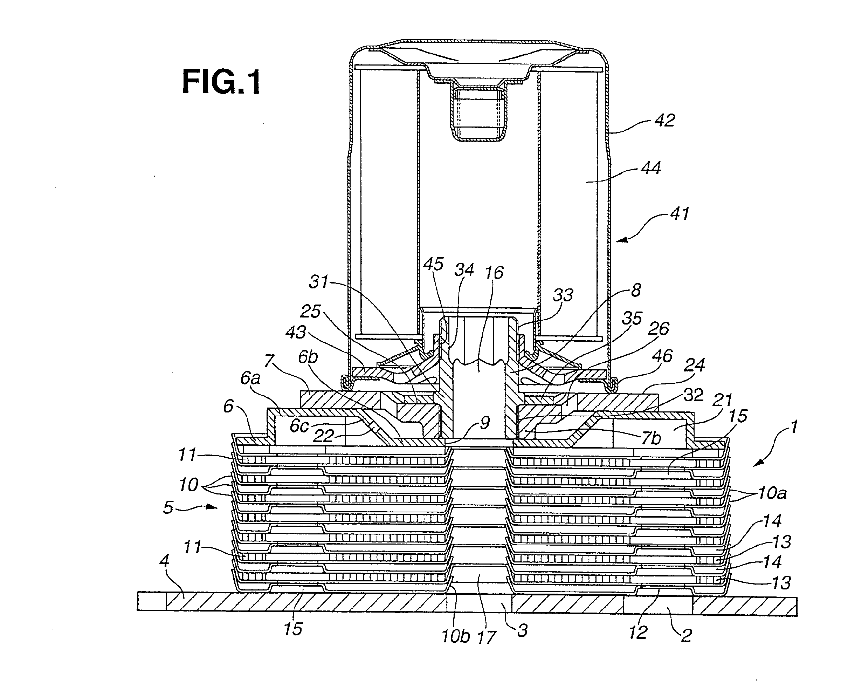

Referring now to the drawings, particularly to Figs. 1-2, the screw installation structure of the embodiment is exemplified in an oil cooler 1 configured to cool oil that lubricates an automotive engine by heat-exchange between the oil and cooling water (engine coolant). Fig. 1 shows the cross section of the oil cooler 1 onto which an oil filter 41 is fitted and installed. Only for good understanding, in the following discussion, the attitude of the oil cooler and oil filter assembly, as shown in Fig. 1, is used as a reference for defining the term "up-and-down direction". However, for practical (actual) use, the attitude of installation of the oil cooler and oil filter assembly is not limited to the particular embodiment shown in Fig. 1.

Oil cooler 1 is comprised of a comparatively thick-walled base plate 4, an oil-cooler core 5, a top plate 6, and a filter seating plate 7. Base plate 4 has an oil inflow port 2, an oil outflow port 3, a coolant inflow port (not shown), and a coolant outflow port (not shown), all formed in the base plate. Oil-cooler core 5 is constructed by a large number of thin metal core plates 10 and a large number of fin plates 11, alternately stacked or laminated. Oil-cooler core 5 is mounted on the base plate 4. Top plate 6 and filter seating plate 7 are further stacked on the top face of oil-cooler core 5. Also installed at the center of filter seating plate 7 is a cylindrical screw-threaded connector 8 by means of which the oil filter 41 is detachably installed on the filter seating plate 7. Except for the connector 8, each of the component parts of the oil cooler 1 is made of an aluminum-based material. After these component parts of the oil cooler have been stacked and assembled in a predetermined preassembling state, the oil-cooler component parts are brazed and integrally joined together by heating them in a furnace.

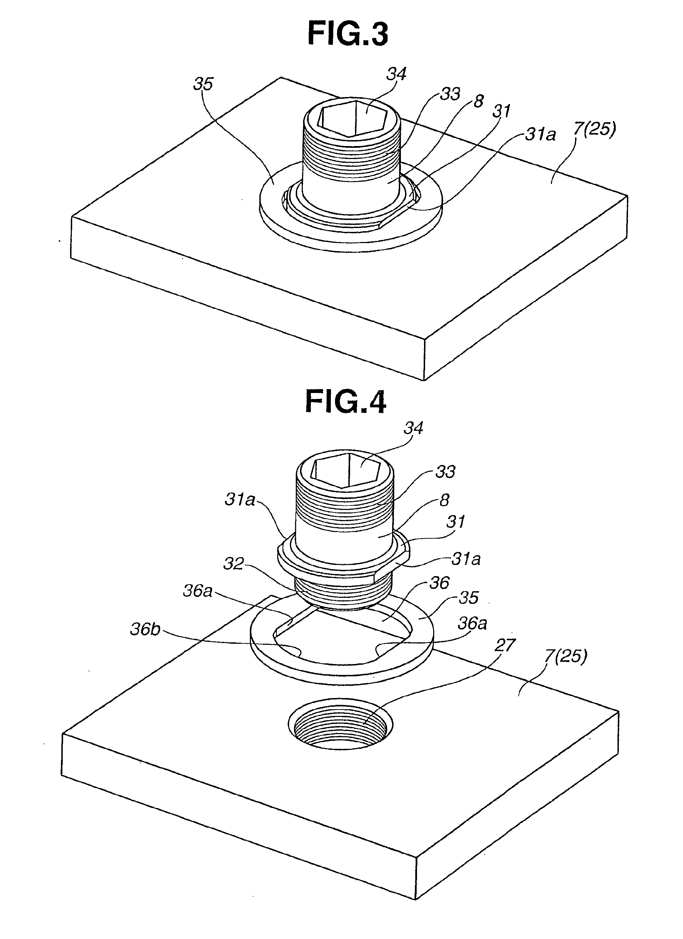

Regarding the detailed structure of oil-cooler core 5, as shown in Figs. 1-2, each of core plates 10 is basically formed as a substantially rectangular shallow-dish-shaped core plate. Core plates 10 and fin plates 11 are alternately stacked and laminated such that an oil passage 13 and a coolant passage 14 are alternately formed between the adjacent core plates 10. Of these core plates 10, at least one of core plates 10 may be formed as an embossed core plate for increased surface area (i.e., increased heat exchange), for example, as shown in Fig. 3 of JP2010-058166. Actually, core plates 10 without embossing and core plate 10 with embossing may be appropriately combined each other, and thus the combined core-plate set may be used. A so-called clad material (a metal clad) that a brazing filler metal layer (e.g., an aluminum-based material having a melting point relatively lower than that of a base metal) is coated on a surface of the base metal made of an aluminum-based material, is used as each of core plates 10 and fin plates 11. Circumferential edges 10a and central cylindrical edges 10b of core plates 10 adjacent to each other, and a circumferential edge of an oil communication hole 12 are joined together by heating during brazing process. After having brazed and integrally joined together, an oil passage 15, by way of which the oil passages 13 defined among the core plates 10 are vertically communicated with each other, and a coolant passage (not shown), by way of which the coolant passages 14 defined among the core plates 10 are vertically communicated with each other, are formed at the corners of the substantially rectangular oil-cooler core 5. Also formed at the center of oil-cooler core 5 is an oil outflow passage 17 extending from a central oil passage 16 of connector 8 to the oil outflow port 3. By the way, the previously-discussed coolant passage (not shown) is configured to communicate both the coolant inflow port (not shown), and the coolant outflow port (not shown).

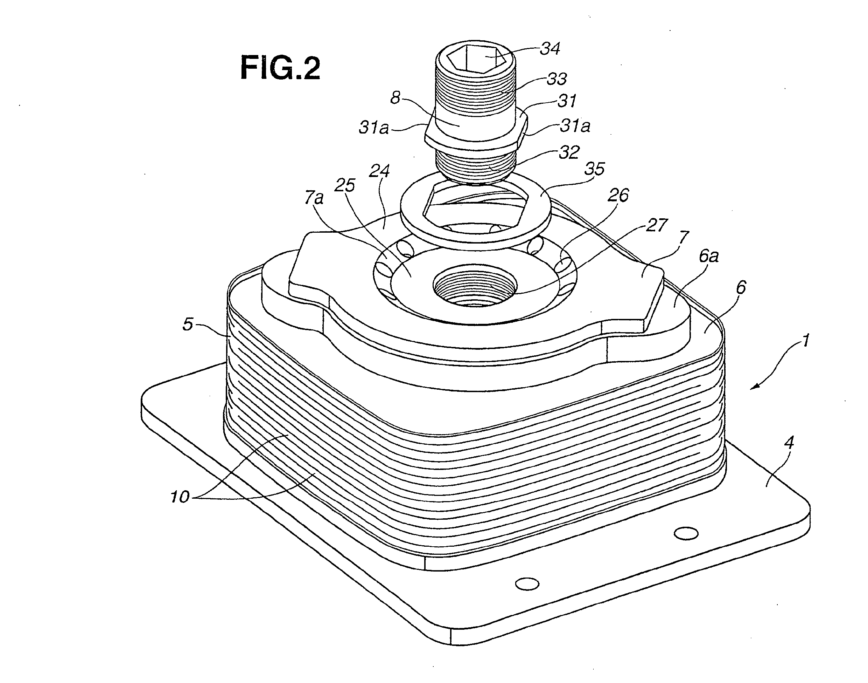

Top plate 6, stacked or mounted on the top face of oil-cooler core 5, is also made of a so-called clad material, in which a brazing filler metal layer (e.g., an aluminum-based material having a melting point relatively lower than that of a base metal) is coated on a surface of the base metal made of an aluminum-based material. The thickness of top plate 6 is greater than that of each core plate 10. Top plate 6 has a substantially elliptical blistered portion 6a formed from diametrically-opposed semi-spherical blistered sections (see Fig. 2). Blistered portion 6a is configured to define an oil passage 21 communicating the uppermost end of each of oil passages 15. As shown in Fig. 1, the annular central portion 6b between the diametrically-opposed semi-spherical blistered sections of blistered portion 6a is relatively recessed and configured to be level with the outer periphery of top plate 6. The circular center opening 9 of the annular central portion 6b of top plate 6 is connected or communicated with the upper end of oil outflow passage 17. A circular truncated cone-shaped tapered portion 6c, defined between the upper face of the blistered portion 6a and the annular flat surface of the central portion 6b, is formed with a plurality of communication holes 22 (through holes) through which the previously-discussed oil passage 21 defined on the inner peripheral side of blistered portion 6a and a space defined on the outer peripheral side of blistered portion 6a are communicated with each other.

Filter seating plate 7, further stacked and mounted on the top plate 6, is made of an aluminum-based material whose thickness is greater than that of the top plate 6. The shape of filter seating plate 7 is configured to be substantially conformable to the shape of blistered portion 6a. Also, filter seating plate 7 has an annular flat filter-seating surface 24. In a similar manner to the recessed central portion 6b of top plate 6, the central portion of the annular flat filter-seating surface 24 of filter seating plate 7 is also recessed and configured to be positioned in the space defined on the outer peripheral side of the recessed central portion 6b of top plate 6. The central recessed portion of the annular flat filter-seating surface 24 provides and constructs an annular flat connector-installing surface 25 concentric to the annular flat filter-seating surface 24 of filter seating plate 7. A circular truncated cone-shaped tapered portion 7a, defined between the annular flat filter-seating surface 24 and the annular flat connector-installing surface 25, is formed with a plurality of communication holes 26 (through holes) through which the inner peripheral side and the outer peripheral side of filter seating plate 7 are communicated with each other.

A screw hole (a female-screw threaded portion) 27 is formed at the center of filter seating plate 7 for installing the connector 8 on the center of filter seating plate 7 by screw-threaded engagement. More concretely, the central portion of filter seating plate 7 is formed as a cylindrical portion 7b protruding toward the top plate 6. Screw hole 27 is formed on the inner periphery of the cylindrical portion 7b. The tip (the lower end) of the cylindrical portion 7b is brazed onto the perimeter of the circular center opening 9 of the annular central portion 6b of top plate 6. By the way, in the shown embodiment, filter seating plate 7 is made of an aluminum-based material whose surface is uncoated with a brazing filler metal. Thus, the contact surface of the underside of filter seating plate 7, installed on the top plate 6, is brazed onto the top plate 6 by melting the brazing filler metal layer coated on the surface of the base metal (the aluminum-based material) of top plate 6. In lieu thereof, filter seating plate 7 itself may be made of a so-called clad material whose surface is coated with a brazing filler metal.

Connector 8 has a flange 31 formed at the axial intermediate section of the connector (see Fig. 2). When assembling, the underside of flange 31 is brought into abutted-engagement (wall-contact) with the annular flat connector-installing surface 25 (see Fig. 1). One cylindrical-hollow portion of connector 33, protruding downward from the flange 31, is formed as a first male screw-threaded portion 32. The first male screw-threaded portion 32 is screwed into the screw hole 27 of filter seating plate 7. By screw-threaded engagement of the first male screw-threaded portion 32 of connector 33 and the screw hole 27 of filter seating plate 7, connector 8 is arranged or placed along the central axis of oil cooler 1 in a standing manner, such that the other cylindrical-hollow portion of connector 8, protruding upward from the flange 31, protrudes above the annular flat filter-seating surface 24 of filter seating plate 7. The upper end of connector 8 is formed as a second male screw-threaded portion 33 onto which the oil filter 41 is detachably installed. As seen in Figs. 1-2, connector 8 is shaped into a substantially cylindrical-hollow shape. The center hollow portion of connector 8 is formed as a central oil-flow passage 16 (axial through hole) extending along the centerline of the cylindrical-hollow connector 8. By the way, the one axial end of the central passage 16 (on the side of the second male screw-threaded portion 33 of connector 8) is formed with a hexagon-socket portion 34. A hexagon-socket screw key (not shown) is fitted to the hexagon-socket portion 34, and then turned for screwing the first male screw-threaded portion 32 of connector 8 into the screw hole 27 of filter seating plate 7. That is, hexagon-socket portion 34 is provided for screw-threaded connection between the first male screw-threaded portion 32 of connector 8 and the screw hole 27 of filter seating plate 7.

As clearly shown in Fig. 1, oil filter 41 is comprised of three major components, namely, a cylindrical casing 42, a comparatively thick-walled basal-end plate 43, and a filter element 44. The basal-end plate 43 is fixedly connected to the opening end of the bottom of the cylindrical casing 42. The filter element 44 is installed in the internal space of the casing 42. The basal-end plate 43 has a screw hole 45 formed at its center. The screw hole 45 of basal-end portion 43 of oil filter 41 is screwed onto the second male screw-threaded portion 33 of connector 8. Although it is not clearly shown in Fig. 1, when oil filter 41 is screwed in and tightened, an annular sealing gasket (not shown), attached to a sealing portion 46 of the circumference of the bottom of casing 42 and coated with oil, is fitted onto the annular flat filter-seating surface 24 of filter seating plate 7 so as to allow the sealing gasket to maintain an appropriate sealing pressure.

Hereunder briefly described is the flow of oil in the oil filter 41. First, oil is flown from the oil inflow port 2 of base plate 4 into the oil-cooler core 5, and then passes through the oil passages 13 defined between the adjacent core plates 10. At this time, heat exchange (heat transfer) that transfers heat from oil in the oil passages 13 to cooling water (coolant) in the coolant passages 14 defined between the adjacent core plates 10, occurs, and thus the oil is cooled. Thereafter, the cooled oil is introduced through the communication holes 22 of top plate 6 and the communication holes 26 of filter seating plate 7 into the outer peripheral side of filter element 44 of oil filter 41, and then radially passes to the inner peripheral side of filter element 44, for filtering or purifying or removing any impurities from the circulating oil. After this, the filtered oil returns from the central oil passage 16 of connector 8 through the oil outflow passage 17 of oil-cooler core 5 to the oil outflow port 3 of base plate 4.

Details of the installation structure of connector 8 are hereunder described.

Referring now to Figs. 3-6, there is shown the detailed structure of installation of the connector 8 onto the filter seating plate 7. For the purpose of simplification of the disclosure, filter seating plate 7 is illustrated as a simple rectangular plate.

Major component parts of oil cooler 1, including the filter seating plate 7, top plate 6 and base plate 4, are made of an aluminum-based material. In contrast, the previously-discussed connector 8 is made of an iron-based material for ensuring a satisfactory mechanical strength and durability needed as a screw-threaded member for supporting the oil filter 41. Hence, generally, it is difficult to join the filter seating plate 7 made of an aluminum-based material and the connector 8 made of an iron-based material together by brazing. Assume that these different metallic components 7 and 8 are joined together by brazing. In such a case, the sufficient strength of the brazed joint could not be obtained.

As best seen in Figs. 3-5, in the shown embodiment, the outer periphery of flange 31, whose basic shape is an annular shape (a ring shape), is partly deformed or modified. Concretely, the partly deformed or modified non-circular portion of flange 31 of connector 8 is formed as two parallel flat-surface sections 31a, 31a, each having a substantially rectangular shape and a cut-out straight edge. More concretely, these two parallel flat-surface sections 31a, 31a are formed or configured as diametrically-opposed width-across-flat sections parallel to each other. When assembling, as discussed previously, the first male screw-threaded portion 32 of connector 8, formed with the deformed flange 31 having the width-across-flat sections 31a, 31a, is screwed into the screw hole 27 of filter seating plate 7 and tightened until the underside of flange 31 is brought into full wall contact with the annular flat connector-installing surface 25 of filter seating plate 7.

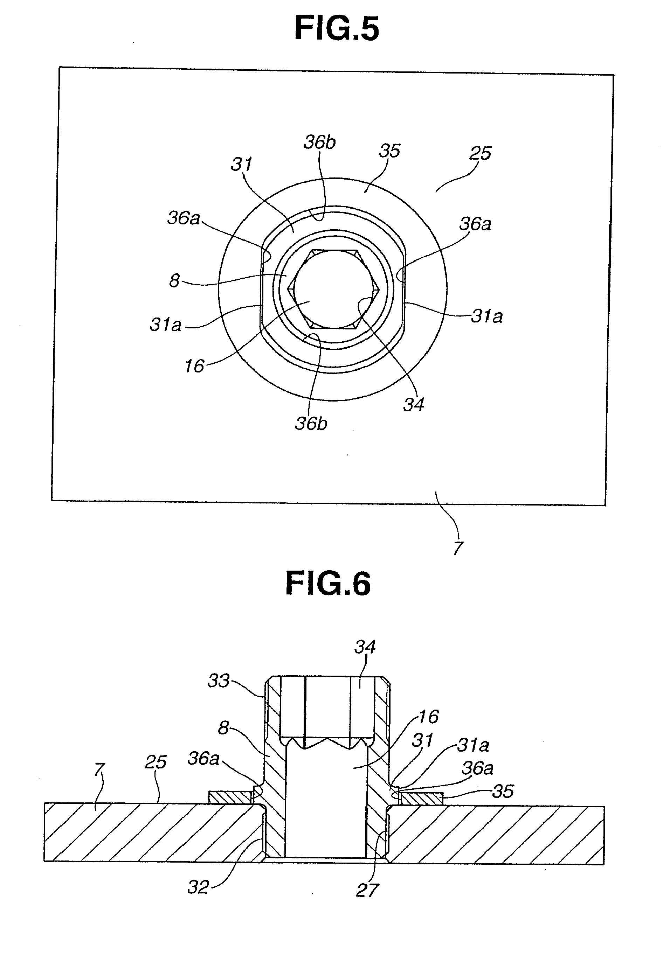

As discussed above, after the connector 8 has been attached onto the filter seating plate 7 by screw-threaded connection, a substantially annular, plain-ring shaped anti-rotation and anti-loosening member 35 is fitted to the outer periphery of flange 31. Thereafter, anti-rotation and anti-loosening member 35 is brazed onto the top face of filter seating plate 7, exactly, onto the connector-installing surface 25. Anti-rotation and anti-loosening member 35 has a central opening 36 configured to be fitted to the outer periphery of flange 31. The opening 36 has diametrically-opposed rectangular flat-surface sections 36a, 36a parallel to each other, and diametrically-opposed circular-arc shaped curved-surface sections 36b, 36b, such that the opening 36 is configured to be substantially conformable to the shape of the outer periphery of flange 31. As clearly shown in Fig. 5, on the one hand, there is a slight clearance space defined between the circular-arc shaped curved-surface section 36b and the associated circular-arc shaped circumference of flange 31. On the other hand, the distance (i.e., the width) between diametrically-opposed rectangular flat-surface sections 36a, 36a of anti-rotation and anti-loosening member 35 is dimensioned to be identical to the distance between diametrically-opposed width-across-flat sections 31a, 31a of flange 31. Hence, with the anti-rotation and anti-loosening member 35 fitted onto the outer periphery of flange 31, diametrically opposed flat-surface sections 36a, 36a are brought into wall contact with respective diametrically-opposed width-across-flat sections 31a, 31a.

Anti-rotation and anti-loosening member 35 is also made of a so-called clad material (a metal clad) that a brazing filler metal layer having a melting point relatively lower than that of a base metal is coated on a surface of the base metal made of an aluminum-based material. Under a state where anti-rotation and anti-loosening member 35 has been mounted or installed on the major component parts of oil cooler 1 (that is, the base plate 4, oil-cooler core 5, top plate 6, and filter seating plate 7 stacked up in that order), the anti-rotation and anti-loosening member 35, together with the oil-cooler major component parts, are heated and brazed in a furnace. Thus, the major component parts of oil cooler 1 are brazed and integrally joined together and simultaneously the anti-rotation and anti-loosening member 35 is brazed onto the top face of filter seating plate 7. By this brazed joint, the flat contact surface of the connector-installing surface 25 of filter seating plate 7 and the flat contact surface of anti-rotation and anti-loosening member 35, in wall contact with each other, are integrally joined together. This ensures a high brazed-joint strength between the anti-rotation and anti-loosening member 35 and the filter seating plate 7, thereby enabling the anti-rotation and anti-loosening member 35 to be securely fixed to the filter seating plate 7. By the way, in the shown embodiment, anti-rotation and anti-loosening member 35 is made of a so-called metal clad whose base metal is made of an aluminum-based material. In lieu thereof, anti-rotation and anti-loosening member 35 may be made of any metallic material except aluminum-based materials, whose metallic material ensures a high brazed-joint strength between the two different metallic components 35 and 7. As will be appreciated from the above, even in the presence of the difficulty of directly joining two different metallic components, namely, the first member (e.g., connector 8 made of an iron-based material) and the second member (e.g., filter seating plate 7 made of an aluminum-based material) together by brazing, or even in the case that two different metallic components having the difficulty of directly brazing have been brazed and thus a lack in the strength of the brazed-joint of these two different metallic components occurs, it is possible to more certainly fix the first member onto the second member by means of the anti-rotation and anti-loosening member brazed onto the connector-installing surface of filter seating plate 7, while being kept in fitted-engagement with the non-circular deformed portion of connector 8.

Under such a state where anti-rotation and anti-loosening member 35 and filter seating plate 7 have been joined together by brazing, undesirable loosening (rotary motion) of the connector 8 relative to the filter seating plate 7 can be more certainly restricted or prevented by means of the anti-rotation and anti-loosening member 35. There is a less risk that the connector 8 undesirably rotates together with the oil filter 41 and loosens due to screwing/unscrewing motion of oil filter 41. In particular, in the previously-discussed screw installation structure of the embodiment, including the brazed anti-rotation and anti-loosening member 35, it is possible to easily ensure a high brazed-joint strength between the anti-rotation and anti-loosening member 35 and the filter seating plate 7, without requiring strict, high-precision management of various heating and brazing conditions, such as heating temperatures and heating time during brazing process. Hence, there are less individual differences of oil coolers manufactured with regard to the fixed strength of connector 8 fixedly connected to filter seating plate 7, in the direction of rotation of connector 8 relative to filter seating plate 7. Additionally, brazing of anti-rotation and anti-loosening member 35 is performed simultaneously with brazing of the other component parts (i.e., the major component parts 4, 5, 6, and 7 of oil cooler 1). This effectively suppress manufacturing processes from being undesirably increased or complicated. Furthermore, in the shown embodiment, the shape of anti-rotation and anti-loosening member 35 is substantially annular, and thus it is possible to eliminate a specific positioning work of anti-rotation and anti-loosening member 35, when brazing. That is, simple fitting of anti-rotation and anti-loosening member 35 onto the outer periphery of flange 31 facilitates the brazing process.

In the shown embodiment, when the first male screw-threaded portion 32 of connector 8 is screwed into the screw hole 27 of filter seating plate 7, the flange 31, formed around the entire circumference of connector 8, is brought into wall contact with the annular flat connector-installing surface 25 of filter seating plate 7. Flange 31, in wall contact with the connector-installing surface 25 of filter seating plate 7, serves to prevent the connector 8 from being inclined with respect to the central axis of oil cooler 1. By the way, instead of using the hexagon-socket portion 34 formed at the axial end of the second male screw-threaded portion 33 of connector 8, diametrically-opposed width-across-flat sections 31a, 31a, constructing the partly deformed or modified portion of flange 31, may be utilized for screw-threaded connection between the first male screw-threaded portion 32 of connector 8 and the screw hole 27 of filter seating plate 7. In this case, the hexagon-socket portion 34 may be eliminated.

In the shown embodiment, the partly deformed or modified non-circular portion of flange 31 is constructed by the diametrically-opposed width-across-flat sections 31a, 31a. It will be appreciated that the partly deformed or modified portion of flange 31 is not limited to such diametrically-opposed width-across-flat sections 31a, 31a, shown and described herein, but that various changes and modifications may be applied. For instance, the partly deformed portion of flange 31 of connector 8 may be configured to have a single rectangular flat-surface section 31a in the circumferential direction of flange 31. The shape (the outline) of flange 31 may be configured as a hexagon or a square or a notched circle that a part of the circumference of circle is partially cut out. In such a case, the opening 36 of anti-rotation and anti-loosening member 35 has to be configured to be substantially conformable to the modified flange shape, e.g., a hexagon or a square or a notched circle. Also, in the shown embodiment, the flange 31 is continuously formed around the entire circumference of connector 8. Alternatively, the flange 31 may be partially formed in the circumferential direction of connector 8.

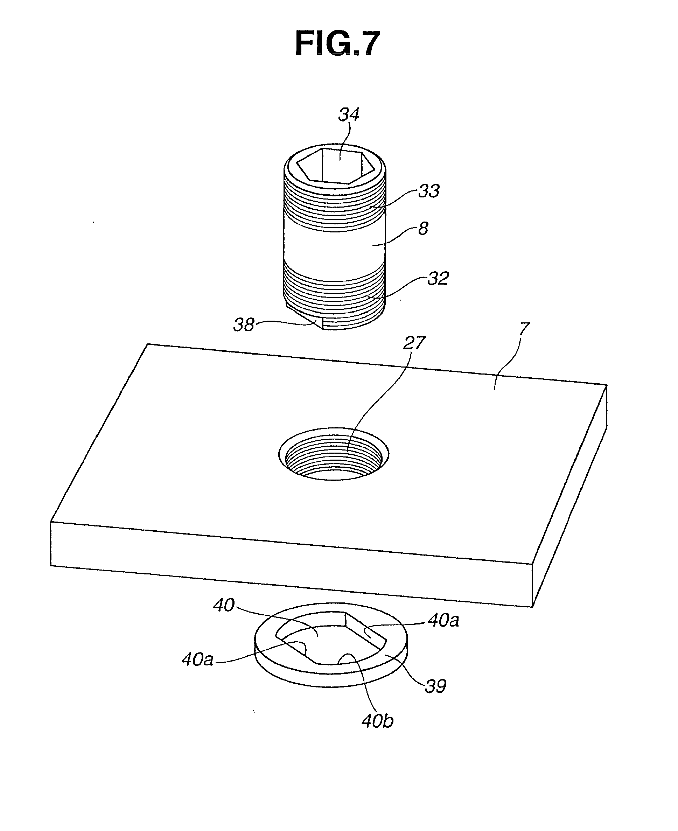

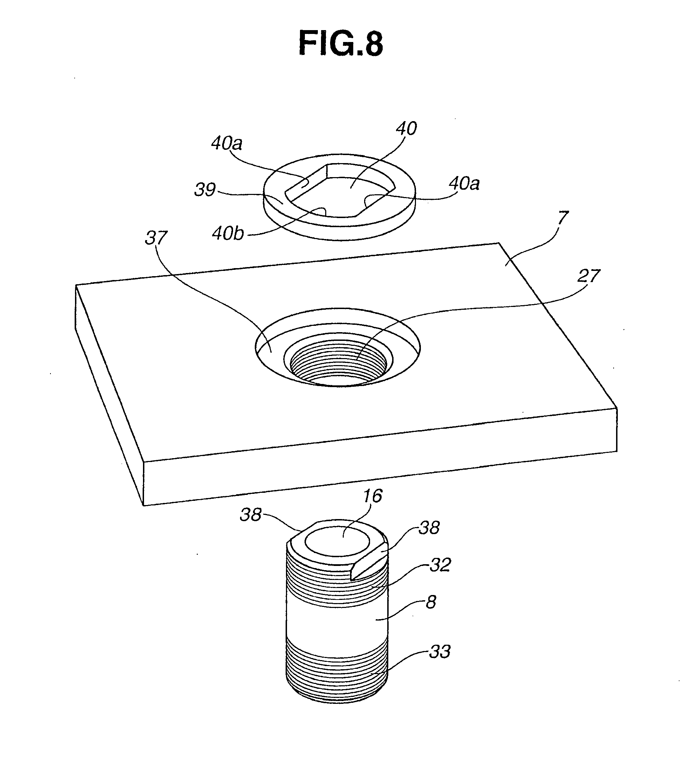

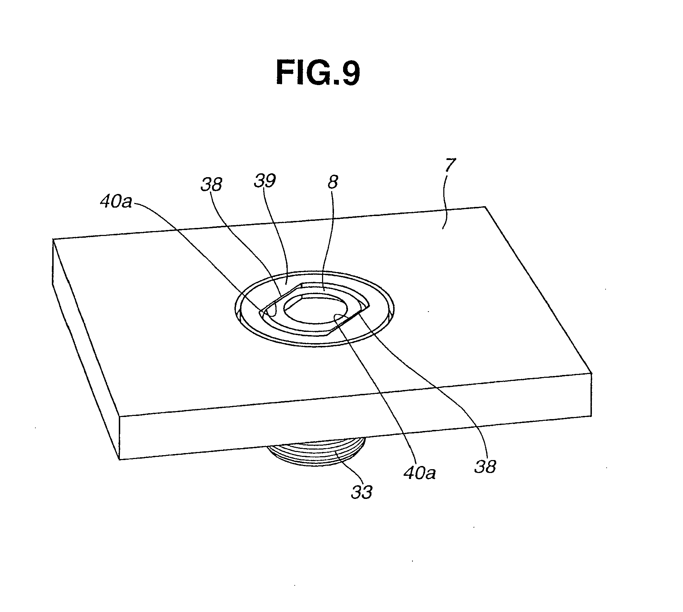

Referring now to Figs. 7-9, there is shown the second embodiment of the connector installation structure. In the second embodiment, the axial end of the first male screw-threaded portion 32 of connector 8, which is configured to be screwed into the screw hole 27 of filter seating plate 7, is partly deformed or machined. Concretely, as shown in Fig. 8, the partly deformed or machined non-circular portion of the outer periphery of the axial end of the first male screw-threaded portion 32 of connector 8 is formed as two parallel flat-surface cutout sections 38, 38, each having a substantially rectangular shape and a cut-out straight edge. In the second embodiment, connector 8 is not formed at its intermediate section with a flange. That is, the connector 8 of the second embodiment is a non-flange equipped connector. However, the connector 8 of the second embodiment may be modified to have a flange formed at its intermediate section, for more effectively preventing the connector 8 from being inclined with respect to the central axis of oil cooler 1.

As clearly shown in Fig. 8, an anti-rotation and anti-loosening member accommodation annular recessed groove 37 is formed or machined in the underside of filter seating plate 7 and configured to be concentric to the centerline of the screw hole 27. A substantially annular, plain-ring shaped anti-rotation and anti-loosening member 39 is fitted into the annular recessed groove 37. The shape of anti-rotation and anti-loosening member 39 of the second embodiment is similar to that of anti-rotation and anti-loosening member 35 of the first embodiment. That is, anti-rotation and anti-loosening member 39 has a central opening 40 configured to be fitted to the partly deformed or machined portion of the outer periphery of the axial end of the first male screw-threaded portion 32 of connector 8. Concretely, the opening 40 has diametrically-opposed rectangular flat-surface sections 40a, 40a parallel to each other, and diametrically-opposed circular-arc shaped curved-surface sections 40b, 40b, such that the opening 40 is configured to be substantially conformable to the shape of the partly deformed or machined portion of the outer periphery of the axial end of the first male screw-threaded portion 32. Anti-rotation and anti-loosening member 39 is also made of a so-called clad material (a metal clad) that a brazing filler metal layer having a melting point relatively lower than that of a base metal is coated on a surface of the base metal made of an aluminum-based material.

Under a state where the above-mentioned connector 8 has been screwed into the screw hole 27 of filter seating plate 7, the axial end (i.e., the partly deformed or machined portion) of the first male screw-threaded portion 32 is protruded from the screw hole 27 of filter seating plate 7 and placed or positioned in the annular recessed groove 37. Thereafter, anti-rotation and anti-loosening member 39 is fitted into the annular recessed groove 37 and fitted onto the outer periphery of the partly deformed or machined portion of the first male screw-threaded portion 32. Under these conditions, that is, with the diametrically opposed flat-surface sections 40a, 40a in wall contact with the respective parallel flat-surface cutout sections 38, 38, and with the flat contact surface of anti-rotation and anti-loosening member 39 in wall contact with the flat contact surface (the bottom face) of the annular recessed groove 37 of the underside of filter seating plate 7, brazing is performed, thus enabling the flat contact surface of anti-rotation and anti-loosening member 39 and the flat contact surface (the bottom face) of the annular recessed groove 37 to be integrally joined together by brazing. Additionally, according to the screw installation structure (the installation structure of connector 8) of the second embodiment, the thickness of plain-ring shaped anti-rotation and anti-loosening member 39 is dimensioned to be identical to the depth of the annular recessed groove 37. Thus, in the oil cooler assembled and brazed, the brazed anti-rotation and anti-loosening member 39, whose underside is flush with the underside of filter seating plate 7, is placed between the annular recessed groove 37 of filter seating plate 7 and the top plate 6. Therefore, in the same manner as the anti-rotation and anti-loosening member 35 of the first embodiment, also in the second embodiment undesirable loosening (rotary motion) of the connector 8 relative to the filter seating plate 7 can be more certainly restricted or prevented by means of the anti-rotation and anti-loosening member 39. Hence, it is possible to more certainly prevent the connector 8 from rotating together with the oil filter 41 due to screwing/unscrewing motion of oil filter 41.

In the shown embodiments, the screw installation structure of the invention is applied to installation of the screw-threaded connector 8 of oil cooler 1. It will be appreciated that the inventive concept can be applied to installation of various kinds of screw-threaded members. Also, the screw installation structures of the shown embodiments are exemplified in the combination of an iron-based material made into the first metallic component (the connector 8) and an aluminum-based material made into the second metallic component (the filter seating plate 7). It will be appreciated that the inventive concept is not limited to the particular combination of an iron-based material and an aluminum-based material. The inventive concept can be applied to the combination of various metallic materials.

While the foregoing is a description of the preferred embodiments carried out the invention, it will be understood that the invention is not limited to the particular embodiments shown and described herein, but that various changes and modifications may be made without departing from the scope or spirit of this invention as defined by the following claims.

## Claims

1. A screw installation structure in which a first member (8) having a male screw-threaded portion (32) is fixed to a second member (7) having a screw hole (27) by screw-threaded connection between the male screw-threaded portion (32) and the screw hole (27), comprising:
a non-circular deformed portion (31a, 31a; 38, 38) partly formed on an outer periphery of a portion of the first member (8), exposed from the screw hole (27) of the second member (7); and
an anti-rotation and anti-loosening member (35; 39) configured to be brought into fitted-engagement with the non-circular deformed portion (31a, 31a; 38, 38),
wherein the anti-rotation and anti-loosening member (35; 39), in fitted-engagement with the non-circular deformed portion (31a, 31a; 38, 38), is brazed onto a surface of the second member (7) in wall contact with a contact surface of the anti-rotation and anti-loosening member (35; 39).

2. The screw installation structure as recited in claim 1, wherein:
the first member (8) has a flange (31) formed at an end-of-thread of the male screw-threaded portion (32) and configured to be brought into wall contact with the surface of the second member (7) when screwing the male screw-threaded portion (32) into the screw hole (27);
the non-circular deformed portion (31a, 31a) is formed on an outer periphery of the flange (31); and
the anti-rotation and anti-loosening member (35) is formed into a substantially annular shape configured to be conformable to an outline of the non-circular deformed portion (31a, 31a) and further configured to surround an entire circumference of the flange (31).

3. The screw installation structure as recited in claim 1, wherein:
the first member (8) has the non-circular deformed portion (38, 38) formed at an axial end of the male screw-threaded portion (32) screwed into the screw hole (27); and
the anti-rotation and anti-loosening member (39) is brazed onto an underside of the second member (7).

4. The screw installation structure as recited in claim 3, wherein:
the second member (7) has an annular recessed groove (37) formed in the underside of the second member (7) and configured to be concentric to a centerline of the screw hole (27); and
the anti-rotation and anti-loosening member (39), whose thickness is dimensioned to be identical to a depth of the annular recessed groove (37), is fitted into the annular recessed groove (37), and then brazed onto a bottom face of the annular recessed groove (37).

5. The screw installation structure as recited in any one of preceding claims 1 to 4, wherein:
the second member (7) is one of a plurality of members (4, 5, 6, 7) integrally joined together by brazing;
the anti-rotation and anti-loosening member (35; 39) is simultaneously brazed together with brazing of the plurality of members (4, 5, 6, 7).

6. The screw installation structure as recited in any one of preceding claims 1 to 5, wherein:
the second member is a filter seating plate (7) constructing a part of an oil cooler (1) that a large number of core plates (10) and a large number of fin plates (11) are alternately stacked; and
the first member is a cylindrical connector (8) fixed to a center of the filter seating plate (7) and having a second male screw-threaded portion (33) adapted to be engaged with an oil filter (41) with a screwing motion of the oil filter (41) and disengaged from the oil filter (41) with an unscrewing motion of the oil filter (41).
